# FASCICULE DE BREVET EUROPEEN

(11) **EP 0 356 345 B1**
(45) Date de publication et mention de la délivrance du brevet: **29.12.1993**
(21) Numéro de dépôt: 89420281.1
(22) Date de dépôt: 27.07.1989
(51) Int. Cl.: G03B 27/73

(54) **Installation perfectionnée pour le tirage d'épreuves photographiques**
Vorrichtung zum Kopieren von photographischen Bildern
Photographic images copying device

(30) Priorité: 18.08.1988 FR 8811137
(43) Date de publication de la demande: 28.02.1990
(73) Titulaire: KIS PHOTO INDUSTRIE S.a.r.l., 38100 Grenoble (FR)
(72) Inventeur: Gerstch, Franck, F-38240 Meylan (FR)
(74) Mandataire: Laurent, Michel

(56) Documents cités:
- DE-B- 2 535 034
- FR-A- 2 600 783
- US-A- 2 049 556
- US-A- 4 152 068

## Description

L'invention concerne une installation perfectionnée pour le tirage d'épreuves photographiques, du type comprenant une section d'exposition, un système d'analyse couleur et éventuellement un densitomètre.

Comme on le sait, et telle qu'il est décrit dans le document FR-A-2 600 783, une section d'exposition comprend essentiellement dans l'ordre le long d'un axe optique :
. une source de lumière régulée,
. un condenseur définissant un flux lumineux, dirigé, de faible section, parallèle à l'axe optique,
. puis un système filtrant agissant sur ce flux lumineux,
. un mélangeur,
. un système passe-vues destiné à faire avancer pas à pas le film négatif de la vue à tirer sous forme d'épreuve photographique,
. et enfin, un objectif rejetant l'image virtuelle sur le plan d'exposition le long duquel défile le papier à insoler.

Le système d'analyse couleurs qui est disposé sur le parcours du film négatif à tirer, et en dehors de l'axe optique, est un système automatique qui permet, à partir de mesures optiques faites sur le film négatif, de déterminer les conditions précises de tirage de ce négatif, notamment la durée et l'intensité de l'exposition.

Si certes cette installation permet d'aboutir à une simplification de l'analyse couleurs, en revanche, le tirage proprement dit est relativement long, compte tenu que pour chacun des négatifs à tirer, il subit préalablement au tirage l'analyse couleurs.

On a également proposé, par exemple dans le document US-A-4 152 068 une installation de ce type, dans laquelle, afin de s'affranchir de cette perte de temps, on procède à l'analyse couleurs du négatif à tirer préalablement à sa mise en place au niveau du trajet optique pour effectuer ce tirage. Néanmoins, cette installation nécessite l'utilisation d'une source lumineuse auxiliaire pour l'analyse couleurs, générant outre un encombrement plus important, une alimentation électrique supplémentaire.

En outre, aucun de ces deux types d'installation ne prend en compte l'analyse en densité optique des épreuves photographiques, dont on sait qu'elle est indispensable si l'on souhaite réaliser des photographies de bonne qualité. De manière connue, cette analyse en densité optique s'effectue au moyen d'un densitomètre, travaillant notamment en réflexion, dans les couleurs fondamentales (rouge, bleu, vert) d'une épreuve colorée opaque en vue de déterminer la nuance de cette épreuve dans chacune desdites couleurs.

L'invention permet, grâce à une source lumineuse unique, d'assurer le fonctionnement de ces différentes fonctions, et ce sans nécessiter de source lumineuse auxiliaire.

Selon l'invention, l'installation perfectionnée pour le tirage d'épreuves photographiques du type comprenant :
- une section d'exposition comprenant dans l'ordre, le long d'un axe optique :
   . une source lumineuse régulée,
   . un condenseur définissant un flux lumineux, dirigé, de faible section, parallèle à l'axe optique,
   . un système filtrant agissant sur ce flux lumineux,
   . un mélangeur,
- un système passe-vues destiné à faire avancer pas à pas le film négatif de la vue à tirer sous forme d'épreuve photographique,
- un objectif projetant une image du négatif à tirer sur un plan d'exposition le long duquel défile le papier à insoler ;
- un système d'analyse couleurs disposé en dehors et en amont de l'axe optique ;
- un moyen optique dirigeant au moins une partie du flux lumineux sur le système d'analyse couleurs ;
- un miroir escamotable destiné :
   . d'une part, pendant les prises de vue, à être escamoté de manière à ce que tout le flux lumineux soit dirigé sur l'objectif ;
   . et d'autre part, en dehors des prises de vue, à intercepter tout le flux lumineux et à le réfléchir pour en diriger au moins une partie par le biais du moyen optique sur le système d'analyse couleurs,
caractérisée en ce que le miroir est escamotable dans le flux lumineux en amont du négatif à tirer, et en ce que le système d'analyse couleurs est disposé sur le parcours du film négatif à tirer en amont de l'axe optique de manière à analyser le négatif consécutif qui sera tiré après avance du film.

En d'autres termes, l'invention consiste à utiliser comme source unique de lumière la lampe d'exposition et lors de la phase d'analyse couleur, à intercepter par un miroir escamotable le flux lumineux dirigé étroit issu de cette lampe et juste avant le mélangeur du système passe-vues, pour le diriger sur le système d'analyse couleurs.

Dans une forme d'exécution avantageuse, particulièrement adaptées aux unités de développement d'épreuves photographiques comportant un système densitomètre en réflexion, le flux lumineux réfléchi par ledit miroir est divisé en au moins deux faisceaux élémentaires canalisés, respectivement l'un vers le système d'analyse couleurs, l'autre vers le densitomètre.

Avantageusement, en pratique :
- le miroir est monté pivotant sur l'un de ses côtés autour d'un axe orthogonal au flux lumineux dirigé ;
- le mouvement de pivotement du miroir est commandé par un moteur à courant continu piloté par le système général de commande des conditions d'exposition ;
- le miroir réfléchit dans la lumière visible ;
- les deux faisceaux élémentaires sont canalisés par un jeu de prismes et de guides d'ondes ;
- les deux faisceaux élémentaires sont canalisés par des fibres optiques.

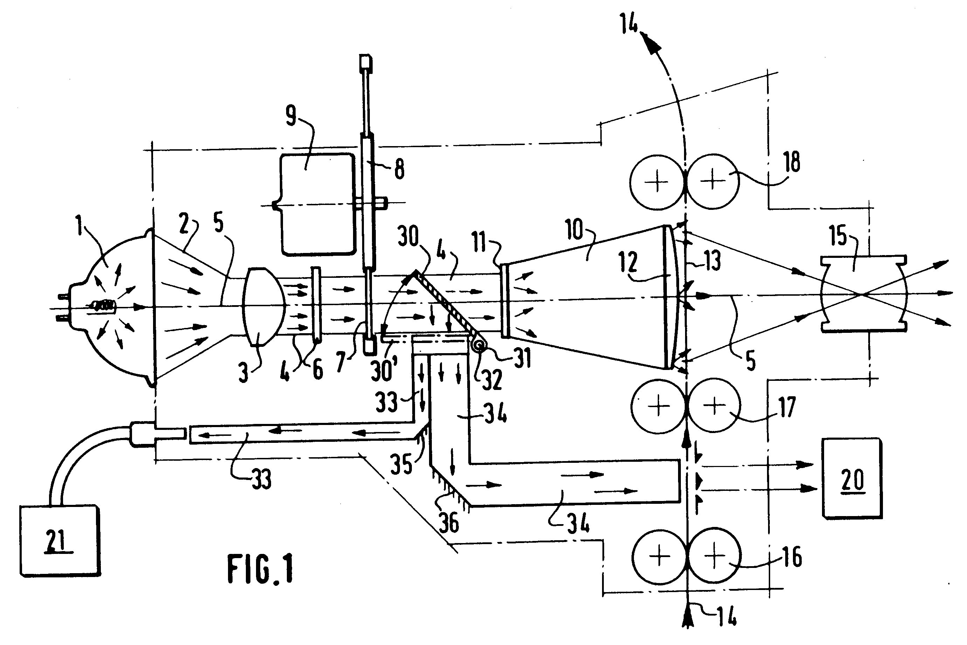

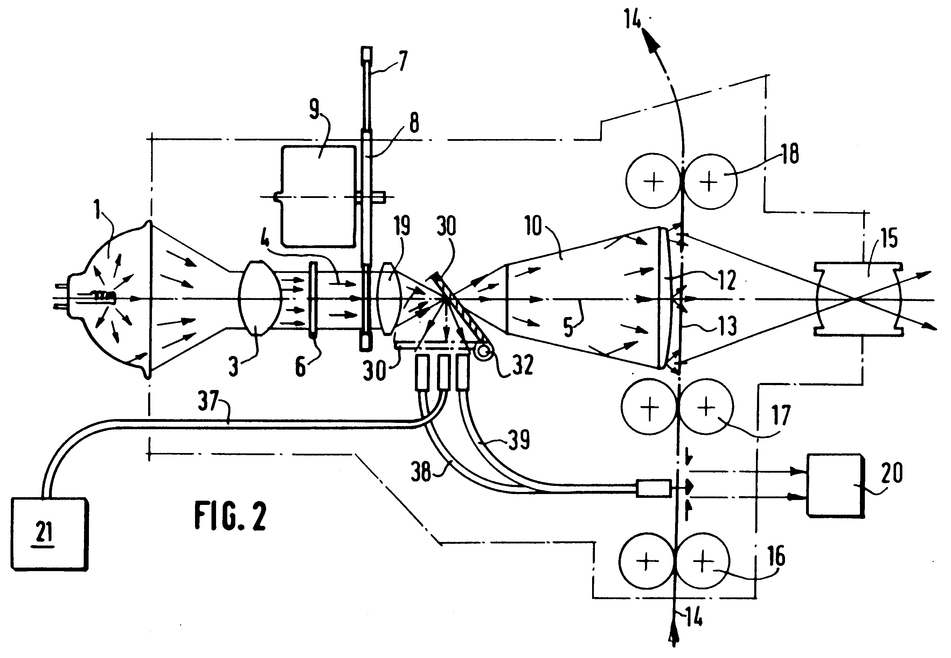

La manière dont l'invention peut être réalisée et les avantages qui en découlent ressortiront mieux des deux exemples de réalisation qui suivent, donnés à titre indicatif et non limitatif, et schématisés sur les deux figures annexées dans lesquelles la figure 1 représente une première forme de réalisation de l'invention avec jeu de prismes et guides d'ondes alors que la figure 2 est une représentation d'une même disposition mais avec fibres optiques.

Comme on le sait, une section d'exposition d'une unité de tirage d'épreuves photographiques comprend essentiellement (voir figures) une lampe d'exposition (1), par exemple à halogène de cent watts à réflecteur elliptique d'où est issu un faisceau (2) de 20° concentré sur un condenseur (3). De ce condenseur (3) est issu un flux lumineux dirigé, de faible section (4), parallèle à l'axe optique (5) qui traverse ensuite un filtre à infra-rouge (6), puis passe devant un filtre proprement dit (7) monté sur un disque porte-filtre (8), entraîné par un moteur pas à pas (9). Le flux lumineux dirigé parallèle (4) rencontre ensuite un prisme de mélange (10) présentant éventuellement à l'entrée un diffuseur (11) et avantageusement, en sortie, un diffuseur concave (12) disposé juste en regard de la vue (13) du film négatif (14) à reproduire. L'ensemble comporte en outre un objectif (15) qui projette l'image virtuelle à tirer sur le plan d'exposition.

Le système passe-vues du film (14) comprend avantageusement trois paires de rouleaux entraînées en synchronisme, respectivement (16,17 et 18). Entre les deux paires de rouleaux (16,17), le film négatif (14) qui défile passe devant le système d'analyse couleur symbolisé par la référence (20). La référence (21) désigne le système densitomètre.

Dans une variante montrée à la figure 2, le flux lumineux comporte également un second condenseur (19).

Selon la caractéristique de l'invention, dans la zone comprise entre le filtre (7) et le mélangeur (10), le flux lumineux dirigé étroit (4) est intercepté par un miroir basculant (30) monté pivotant sur un de ses côtés (31) autour d'un axe (32) orthogonal au flux lumineux dirigé (4). Le mouvement de pivotement de ce miroir (30) est commandé par un moteur à courant continu, non représenté, piloté par le système général de commande des conditions d'exposition de l'appareil. En pratique, ce miroir (30) réfléchit dans le visible. Ce peut être avantageusement une plaque d'aluminium recouverte d'aluminium du type de celui qui est commercialisé dans le commerce sous la marque déposée **BANDOXAL** et dont la face est réfléchissante à au moins 80 %.

Lors de la phase d'exposition proprement dite, c'est-à-dire lors de la phase de prise de vue, le miroir (30) est escamoté par rapport au flux lumineux (4) comme indiqué en pointillés en position (30').

Selon la caractéristique de l'invention, en dehors de cette phase de prise de vue, mais pendant la phase d'analyse couleurs, le miroir (30) est relevé pour intercepter tout le flux lumineux (4) et le réfléchir en le dirigeant sur le système d'analyse couleurs (20) et éventuellement le densitomètre (21), du moins si l'appareil est équipé d'un tel système.

Pour ce faire, le flux lumineux réfléchi est dans une première forme de réalisation reçu sur deux guides d'ondes respectivement (33) et (34) qui, par des jeux de prismes (35,36) rendent le flux lumineux réfléchi respectivement sur le système d'analyse (20) et/ou le densitomètre (21).

Dans une variante montrée à la figure 2, le flux lumineux réfléchi est divisé en trois faisceaux élémentaires constitués par des fibres optiques, respectivement (37) pour aller au densitomètre (21) et (38,39) pour aller au système d'analyse couleurs (20).

Le fait que l'on travaille sur un flux lumineux dirigé de lumière intense mais de faible section, permet de réduire considérablement l'encombrement général de l'appareil. Le fait que le flux lumineux qui arrive sur le système d'analyse couleur (20) et/ou le densitomètre (21) soit dirigé, permet d'obtenir un excellent rendement et enfin le fait que ce flux (4) ait été débarrassé des rayons infra-rouges par le filtre (6), permet de travailler dans le visible.

Dans une variante non représentée, intermédiaire entre les deux formes de réalisation respectivement représentées sur la figure 1 et sur la figure 2, le flux lumineux réfléchi par le miroir escamotable (30) au cours de la phase d'analyse couleur est reçu sur un seul guide d'ondes destiné à amener le flux lumineux sur le système d'analyse (20). Au centre dudit guide d'ondes, est positionnée une fibre optique destinée à acheminer une partie du flux lumineux vers un densitomètre (21). En outre, une seconde fibre optique, de diamètre légèrement inférieur à la précédente, achemine également une partie du flux lumineux au niveau de l'analyse couleur, et plus précisément sur la tranche du film négatif en cours d'analyse, destiné à permettre la lecture du code barres positionné sur cette tranche. Ce code barres indique les principales caractéristiques du film négatif. Dans cette forme de réalisation, tout comme dans la variante représentée à la figure 2, le dispositif comporte un second condenseur (19) destiné à obtenir un flux lumineux convergent-divergent à l'issue de ce dernier.

L installation perfectionnée selon l'invention présente de nombreux avantages. On peut citer :
- sa compacité,
- les faibles pertes optiques donc le haut rendement entre l'endroit où l'on dispose de la lumière et l'endroit où s effectue le traitement des fonctions (analyse couleurs (20) et/ou le densitomètre (21)) ;
- enfin, la simplicité puisque l'on ne fait appel qu'à une source de lumière qu'il est donc facile de réguler.

De la sorte, cette disposition peut être utilisée avec succès dans tous les appareils de tirage d épreuves photographiques, notamment celles destinées à être mises en oeuvre par du personnel peu qualifié.

## Revendications

1. Installation perfectionnée pour le tirage d'épreuves photographiques, du type comprenant :
- une section d'exposition constituée dans l'ordre, le long d'un axe optique (5), par :
. une source lumineuse régulée (2),
. un condenseur (3) définissant un flux lumineux (4) dirigé, de faible section, parallèle à l'axe optique (5),
. un système filtrant (7,8) agissant sur ce flux lumineux (4),
. un mélangeur (10),
- un système passe-vues (16,17,18) destiné à faire avancer pas à pas le film négatif de la vue à tirer sous forme d'épreuve photographique ;
- un objectif (15) projetant une image du négatif à tirer sur un plan d'exposition le long duquel défile le papier à insoler ;
- un système d'analyse couleurs (20) disposé en dehors et en amont de l'axe optique (5) ;
- un moyen optique (34,36) destiné à diriger au moins une partie du flux lumineux (4) sur le système d'analyse couleurs (20) ;
- un miroir escamotable (30) destiné :
. d'une part, pendant les prises de vue (13), à être escamoté, de manière à ce que tout le flux lumineux (4) soit dirigé sur l'objectif (15) ;
. d'autre part, en dehors des prises de vue, à intercepter tout le flux lumineux (4) et à le réfléchir pour en diriger au moins une partie par le biais du moyen optique (34,36) sur le système d'analyse couleurs (20),
caractérisée en ce que le miroir (30) est escamotable dans le flux lumineux (4) en amont du négatif (14) à tirer, et en ce que le système d'analyse couleurs (20) est disposé sur le parcours du film négatif (14) à tirer en amont de l'axe optique (5) de manière à analyser le négatif consécutif qui sera tiré après avance du film (14).

2. Installation perfectionnée selon la revendication 1, du type comprenant également un densitomètre en réflexion pour épreuves photographiques sur papier (21), caractérisée en ce que le flux lumineux (4) réfléchi par le miroir (30) est divisé en au moins deux faisceaux élémentaires (33-37 ; 34-38,39) canalisés respectivement le premier vers le densitomètre (21), le second vers le système d'analyse couleurs (20).

3. Installation perfectionnée selon l'une des revendications 1 et 2, caractérisée en ce que le miroir (30) est monté pivotant sur l'un de ses côtés (31) autour d'un axe (32) orthogonal au flux lumineux dirigé (4).

4. Installation perfectionnée selon la revendication 3, caractérisée en ce que le mouvement de pivotement (32) du miroir escamotable (30) est commandé par un moteur à courant continu piloté lui-même par le système général de commande des conditions d'exposition.

5. Installation perfectionnée selon l'une des revendications 1 à 4, caractérisée en ce que le miroir (30) réfléchit dans le visible.

6. Installation perfectionnée selon l'une des revendications 1 à 5, caractérisée en ce que les deux faisceaux élémentaires (33,34) sont canalisés par des jeux de prismes (35,36) et des guides d'ondes (33,34).

7. Installation perfectionnée selon l'une des revendications 1 à 5, caractérisée en ce que les deux faisceaux élémentaires sont canalisés par des fibres optiques (37,38,39).

## Claims

1. Improved installation for the printing of photographic prints, of the type comprising :
- an exposure section constituted in order, along an optical axis (5) by :
. a regulated light source (2) ;
. a condenser (3) defining a directional light flux (4), of narrow cross-section, parallel to the optical axis (5) ,
. a filter system (7,8) acting on the light flux (4) ;
. a mixer (10) ;
- a frame-moving system (16, 17, 18) intended for the gradual advancing of the negative film to be printed in the form of a photographic print ;
- a lens (15) projecting an image of the negative film to be printed on the exposure plane along which the paper to be exposed passes ;
- a colour analysis system (20) arranged outside and upstream of the optical axis (5) ;
- an optical means (34, 36) intended to direct at least part of the light flux (4) on the colour analysis (20) ;
- a retractable mirror (30) intended :
. on the one hand, during the frame exposures (13) to be retracted, in a manner such that the entire light flux (4) is directed onto the lens (15) ;
. and on the other hand, when frames are not being exposed, to intercept this light flux (4) and to reflect it in order to direct it at least partially by means of the optical means (34, 36) onto the colour analysis system (20);
characterized in that the mirror (30) is retractable in the light flux (4) upstream the negative film (14) to be printed, and in that the colour analysis system (20) is arranged in the path of the negative film (14) to be printed upstream the optical axis (5), in order to analyse the consecutive negative film which will be printed after moving of the film (14).

2. Improved installation according to claim 1, of the type likewise comprising a densitometer (21) which functions in reflection for photographic paper prints, characterized in that the light flux (14) reflected by the mirror (30) is divided into at least two component beams (33-37 ; 34-38, 39) channeled respectively, the first towards the densitometer (21) and the second towards the colour analysis system (20).

3. Improved installation according to one of claims 1 and 2, characterized in that the mirror (30) is mounted to pivot on one of its sides (31) about an axis (32) orthogonal to the directional light flux (4).

4. Improved installation according to claim 3, characterized in that the pivoting movement (32) of the retractable mirror (30) is controlled by a direct current motor which is itself commanded by the general exposure condition control system.

5. Improved installation according to one of Claims 1 to 4, characterized in that the mirror (30) reflects in the visible light range.

6. Improved installation according to one of Claims 1 to 5, characterized in that the two component beams (33, 34) are channelled by sets of prisms (35, 36) and waveguides (33, 34).

7. Improved installation according to one of Claims 1 to 5, characterized in that the two component beams are channelled by optical fibres (37, 38, 39).

## Patentansprüche

1. Verbesserte Vorrichtung zum Abziehen photographischer Abzüge von einer Bauart mit:
- einem Belichtungsabschnitt, der hintereinander entlang der optischen Achse umfaßt:
-- eine geregelte Lichtquelle (2),
-- einen Kondensor (3), der einen gerichteten Lichtstrom (4) mit kleinem Querschnitt parallel zur optischen Achse (5) definiert,
-- ein Filtersystem (7, 8), das auf den Lichtstrom (4) einwirkt,
-- einen Mischer (10),
- einem Transportschaltungssystem (16, 17, 18) zum schrittweisen Weiterbewegen des Negativfilms hinsichtlich des in Form eines photographischen Abzuges abzuziehenden Bildes;
- einem Objektiv (15) zum Projizieren eines Bildes des abzuziehenden Negativs auf eine Belichtungsebene entlang der das zu belichtetende Papier entlangläuft;
- einem Farbanalysesystem (20), das außerhalb und stromaufwärts der optischen Achse (5) angeordnet ist;
- einem optischen Mittel (34, 36) zum Richten mindestens eines Teiles des Lichtstromes (4) auf das Farbanalysesystem (20);
- einem Klappspiegel (30), um
-- einerseits, während der Belichtung (13), so geklappt zu werden, daß der gesamte Lichtstrom (4) auf das Objektiv (15) gerichtet wird;
-- andererseits, außerhalb der Belichtung, den gesamten Lichtstrom (4) aufzufangen und zu reflektieren, um davon mindestens einen Anteil mittels der Ablenkung des optischen Mittels (34, 36) auf das Farbanalysesystem (20) zu richten,
dadurch gekennzeichnet, daß der Spiegel (30) im Lichtstrom (4) stromaufwärts des abzuziehenden Negativs (14) klappbar ist und daß das Farbanalysesystem (20) auf der Bewegungsbann des abzuziehenden Negativfilms (14) stromaufwärts der optischen Achse (5) angeordnet ist, so daß das jeweils nachfolgende Negativ analysiert wird, das nach einem Weiterbewegen des Films (14) abgezogen werden wird.

2. Verbesserte Vorrichtung nach Anspruch 1 von einer Bauart, die zugleich einen Reflexions-Schwärzungsmesser für photographische Abzüge auf Papier (21) umfaßt, dadurch gekennzeichnet, daß der vom Spiegel (30) reflektierte Lichtstrom (4) in mindestens zwei elementare Bündel (33 bis 37; 34 bis 38, 39) aufgeteilt wird, von denen der erste auf den Schwärzungsmesser (21) und der zweite auf das Farbanalysesystem (20) geleitet wird.

3. Verbesserte Vorrichtung nach Anspruch 1 oder 2, dadurch gekennzeichnet, daß der Spiegel (30) an einem seiner Ränder (31) um eine Achse (32) rechtwinkelig zum gerichteten Lichtstrom (4) schwenkbar gelagert ist.

4. Verbesserte Vorrichtung nach Anspruch 3, dadurch gekennzeichnet, daß die Schwenkbewegung (32) des Klappspiegels (30) durch einen Gleichstrommotor gesteuert wird, der seinerseits vom allgemeinen System für die Steuerung der Belichtungsbedingungen eingestellt wird.

5. Verbesserte Vorrichtung nach einem der Ansprüche 1 bis 4, dadurch gekennzeichnet, daß der Spiegel (30) im sichtbaren Bereich reflektiert.

6. Verbesserte Vorrichtung nach einem der Ansprüche 1 bis 5, dadurch gekennzeichnet, daß die beiden elementaren Bündel (33, 34) mittels eines Satzes Prismen (35, 36) sowie mittels Lichtleitern (33, 34) geleitet werden.

7. Verbesserte Vorrichtung nach einem der Ansprüche 1 bis 5, dadurch gekennzeichnet, daß die beiden elementaren Bündel mittels optischer Fasern (37, 38, 39) geleitet werden.
